# EUROPÄISCHE PATENTANMELDUNG

(11) **EP 3 372 879 A1**
(43) Veröffentlichungstag der Anmeldung: **12.09.2018**
(21) Anmeldenummer: 18160892.8
(22) Anmeldetag: 09.03.2018
(51) Int. Cl.: F16K 31/60, F16K 35/04, F16K 11/078

(54) **KARTUSCHE MIT ADAPTIVER VERDREHWINKELVERGRÖSSERUNG**

(30) Priorität: 10.03.2017 DE 102017105188
(71) Anmelder: Grohe AG, 58675 Hemer (DE)
(72) Erfinder: Tüshaus, Jan Philipp, 58675 Hemer (DE)

(57) **Zusammenfassung**

Die Erfindung betrifft eine Kartusche (1) für eine Sanitärarmatur mit einem Gehäuse (2), einer Schwenkhülse (5) zum schwenkbaren Aufnehmen eines Betätigungselements (6), die zumindest teilweise in dem Gehäuse (2) angeordnet und gegenüber diesem zum Einstellen der Wassertemperatur verdrehbar ist, und einem Begrenzungselement (6) zum Begrenzen der Verdrehbarkeit der Schwenkhülse (5), das auf einen ersten Verdrehwinkel (a) begrenzt gemeinsam mit der Schwenkhülse (5) gegenüber dem Gehäuse (2) verdrehbar ist. Erfindungsgemäß ist die Schwenkhülse (5) gegenüber dem Begrenzungselement (6) um einen zweiten Verdrehwinkel (β) verdrehbar, so dass die Schwenkhülse (5) gegenüber dem Gehäuse (2) insgesamt über den ersten und zweiten Verdrehwinkel (α, β) verdreht werden kann.

## Beschreibung

Die vorliegende Erfindung betrifft eine Kartusche für eine Sanitärarmatur mit einem Gehäuse, einer Schwenkhülse zum schwenkbaren Aufnehmen eines Betätigungselements, die zumindest teilweise in dem Gehäuse angeordnet und gegenüber diesem zum Einstellen der Wassertemperatur verdrehbar ist, und einem Begrenzungselement zum Begrenzen der Verdrehbarkeit der Schwenkhülse, das auf einen ersten Verdrehwinkel begrenzt gemeinsam mit der Schwenkhülse gegenüber dem Gehäuse verdrehbar ist.

Aus der DE 199 13 214 A1 ist eine Kartusche für eine Sanitärarmatur bekannt, bei der der Verdrehwinkel einer Schwenkhülse mittels eines Begrenzungselements beschränkt ist. Nachteilig hierbei ist, dass derartige Kartuschen für Anwendungen ungeeignet sind, bei denen ein größerer Verdrehwinkel notwendig ist, insbesondere wenn aus Festigkeitsgründen zwei oder mehr Anschläge benötigt werden.

Aufgabe der vorliegenden Erfindung ist es somit, die Drehwinkelbegrenzung zu reduzieren, so dass die Schwenkhülse um einen größeren Verdrehwinkel verdrehbar ist.

Die Aufgabe wird gelöst durch eine Kartusche mit den Merkmalen des unabhängigen Patentanspruchs 1.

Vorgeschlagen wird eine Kartusche für eine Sanitärarmatur mit einem Gehäuse und einer Schwenkhülse zum schwenkbaren Aufnehmen eines Betätigungselements. Die Schwenkhülse ist zumindest teilweise in dem Gehäuse angeordnet und gegenüber diesem zum Einstellen der Wassertemperatur verdrehbar. Des Weiteren umfasst die Kartusche ein Begrenzungselement zum Begrenzen der Verdrehbarkeit der Schwenkhülse. Das Begrenzungselement ist gemeinsam mit der Schwenkhülse gegenüber dem Gehäuse verdrehbar. Die Verdrehbarkeit des Begrenzungselements ist jedoch auf einen ersten Verdrehwinkel begrenzt. Die Schwenkhülse ist gegenüber dem Begrenzungselement um einen zweiten Verdrehwinkel verdrehbar. Hierdurch kann vorteilhafterweise der Gesamtverdrehwinkel der Schwenkhülse vergrößert werden, da diese nunmehr gegenüber dem Gehäuse insgesamt über den ersten und zweiten Verdrehwinkel verdreht werden kann. Die Schwenkhülse kann somit im Vergleich zum Begrenzungselement über einen größeren Verdrehwinkel verdreht werden. Vorteilhafterweise kann die Kartusche somit auch für Anwendungen verwendet werden, bei denen ein größerer Verdrehwinkel vorausgesetzt wird. Hierdurch kann die Kartusche sehr flexibel für unterschiedliche Anwendungen eingesetzt werden.

Vorteilhaft ist es, wenn zwischen dem Begrenzungselement und der Schwenkhülse ein Begrenzungsmechanismus ausgebildet ist. Dieser ist vorzugsweise derart ausgebildet, dass die Verdrehbarkeit der Schwenkhülse gegenüber dem Begrenzungselement auf den zweiten Verdrehwinkel beschränkt ist. Vorteilhafterweise kann somit die Schwenkhülse nicht nur im Rahmen des ersten Verdrehwinkels, sondern über diesen hinaus zusätzlich aufgrund der Relativverdrehbarkeit zwischen Schwenkhülse und Begrenzungselement über den durch den zweiten Verdrehwinkel vergrößerten Schwenkwinkel verdreht werden.

Eine konstruktiv einfache und somit kostengünstige Ausgestaltung des Begrenzungsmechanismus kann dadurch sichergestellt werden, wenn der Begrenzungsmechanismus eine an dem Begrenzungselement oder der Schwenkhülse ausgebildete Begrenzungsaussparung und einen am anderen der beiden Bauteile ausgebildeten und in die Begrenzungsaussparung eingreifenden Begrenzungsfortsatz aufweist.

Um eine Verdrehbarkeit zwischen Schwenkhülse und Begrenzungselement sicherstellen zu können, ist es vorteilhaft, wenn sich die Begrenzungsaussparung und/oder der Begrenzungsfortsatz jeweils in Umfangsrichtung der Kartusche erstrecken. Hierdurch kann der Begrenzungsfortsatz in Umfangsrichtung innerhalb der Begrenzungsaussparung verschoben werden.

Damit die Schwenkhülse über den ersten Verdrehwinkel hinaus zusätzlich um den zweiten Verdrehwinkel verdreht werden kann, ist es vorteilhaft, wenn sich die Begrenzungsaussparung im Vergleich zum Begrenzungsfortsatz über ein größeres Winkelintervall erstreckt. Hierdurch ist der Begrenzungsfortsatz in Umfangsrichtung der Kartusche mit Spiel in der Begrenzungsaussparung aufgenommen. Über dieses Spiel ist der zweite Verdrehwinkel festgelegt.

Um die Relativverdrehbarkeit der Schwenkhülse und des Begrenzungselements mit konstruktiv einfachen Mitteln beschränken zu können, ist es vorteilhaft, wenn die Begrenzungsaussparung zwei voneinander in Umfangsrichtung der Kartusche beabstandete Endanschläge aufweist. Die Endanschläge sind somit an zwei gegenüberliegenden Enden der Begrenzungsaussparung ausgebildet.

Damit die Kartusche auch für Anwendungen eingesetzt werden kann, in denen eine geringere Verdrehwinkelbeschränkung notwendig ist, ist es vorteilhaft, wenn das Begrenzungselement oder die Schwenkhülse eine zur Begrenzungsaussparung in Umfangsrichtung der Kartusche benachbarte Arretieraussparung aufweist. Die Arretieraussparung ist derart ausgebildet, dass mittels dieser in einem alternativen Montagezustand eine drehfeste Verbindung zwischen Schwenkhülse und Begrenzungselement ausgebildet werden kann.

Um die Drehwinkelvergrößerung für gewisse Anwendungsfälle wieder rückgängig zu machen, ist es vorteilhaft, wenn der Begrenzungsfortsatz in dem alternativen Montagezustand formschlüssig und/oder spielfrei in der Arretieraussparung aufnehmbar ist. Hierdurch kann die Schwenkhülse mit dem Begrenzungselement drehfest verbunden werden, so dass diese gemeinsam nur noch über den ersten Verdrehwinkel und nichtmehr zusätzlich um den zweiten Verdrehwinkel verdrehbar sind.

Um in diesem alternativen Montagezustand eine drehfeste Verbindung zwischen Schwenkhülse und Begrenzungselement auszubilden, ist es vorteilhaft, wenn der Begrenzungsfortsatz und die Arretieraussparung eine zueinander korrespondierende Form aufweisen. Vorzugsweise ist hierbei der Begrenzungsfortsatz als Verzahnung ausgebildet. Zusätzlich oder alternativ ist die Arretieraussparung als zur Begrenzungsfortsatzverzahnung korrespondierende Verzahnung ausgebildet. In einer bevorzugten Ausgestaltung ist der Begrenzungsfortsatz als Innenverzahnung und die Arretieraussparung als Außenverzahnung ausgebildet. Alternativ kann deren Anordnung aber auch ebenso vertauscht sein, insbesondere wenn die Begrenzungsaussparung am Innenumfang des Begrenzungselements ausgebildet ist.

Vorteilhaft ist es, wenn das Begrenzungselement in dem alternativen Montagezustand im Vergleich zur Schwenkhülse in zumindest zwei zueinander unterschiedlichen Orientierungen arretierbar ist. Hierdurch kann beispielsweise der Verdrehwinkel, insbesondere in Richtung Heißwasser, unterschiedlich stark begrenzt werden. Dies kann konstruktiv einfach umgesetzt werden, wenn sich eine der beiden Verzahnungen im Vergleich zur anderen um ein größeres Winkelintervall erstreckt.

Um die Verdrehbarkeit des Begrenzungselements gegenüber dem Gehäuse auf den ersten Verdrehwinkel zu begrenzen, ist es vorteilhaft, wenn zwischen dem Begrenzungselement und dem Gehäuse ein Anschlagsmechanismus ausgebildet ist. Hierbei können das Begrenzungselement und das Gehäuse miteinander korrespondierende Anschlagspaare aufweisen, die jeweils in einer der beiden Drehendstellungen aneinander anliegen.

In einer vorteilhaften Weiterbildung der Erfindung ist das Begrenzungselement als Begrenzungshülse ausgebildet. Hierbei ist die Begrenzungshülse vorzugsweise in einer kopfseitigen Öffnung der Kartusche eingesetzt und/oder lösbar mit dieser verbunden, insbesondere verklippst.

Auch ist es vorteilhaft, wenn der Anschlagsmechanismus an einem Außenumfang und/oder der Begrenzungsmechanismus an einem Innenumfang des Begrenzungselements ausgebildet sind. Hierdurch kann die Kartusche mit ihrer Drehwinkelvergrößerung sehr bauraumsparend und kostengünstig ausgebildet werden.

Weitere Vorteile der Erfindung sind in den nachfolgenden Ausführungsbeispielen beschrieben. Es zeigt:
- **Figur 1**: eine Kartusche für eine Sanitärarmatur in perspektivischer Darstellung,
- **Figur 2**: eine perspektivische Teilschnittansicht der Kartusche im Bereich eines Begrenzungsmechanismus in einem ersten Montagezustand,
- **Figur 3a**: eine Querschnittsansicht der Kartusche im Bereich des Begrenzungsmechanismus in dem ersten Montagezustand und
- **Figur 3b**: eine Querschnittsansicht der Kartusche im Bereich des Begrenzungsmechanismus in einem alternativen zweiten Montagezustand.

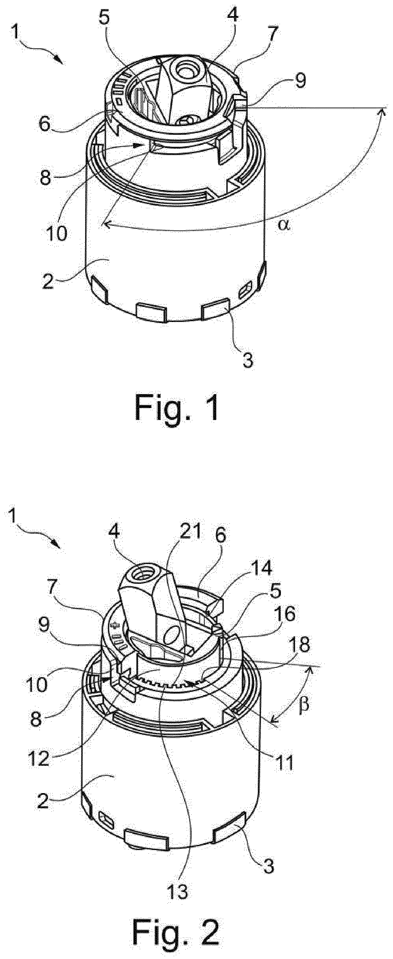

Figur 1 zeigt eine Kartusche 1, die zum Einsetzen in eine Sanitärarmatur vorgesehen ist. Die Kartusche 1 weist ein Gehäuse 2 auf. Des Weiteren umfasst die Kartusche 1 einen Boden 3, der lösbar mit dem Gehäuse 2 verbunden ist. Zum Anschluss einer Warm- und einer Kaltwasserleitung weist der Boden 3 zwei in den Abbildungen verdeckte Öffnungen auf. Im Inneren des Gehäuses 2 weist die Kartusche 1 eine vorliegend nicht dargestellte Steuerscheibe auf, über deren Verdrehung und Verschiebung die Temperatur und die Wassermenge eingestellt werden können. Dies erfolgt über ein Betätigungselement 4, das im Kopfbereich des Gehäuses 2 aus diesem herausragt.

Zur Lagerung dieses Betätigungselements 4 umfasst die Kartusche 1 gemäß Figur 1 und 2 eine Schwenkhülse 5. Die Schwenkhülse 5 nimmt das Betätigungselement 4 schwenkbar auf. Über die Schwenkbewegung des Betätigungselements 4 kann, wie bereits vorstehend erwähnt, die Wassermenge eingestellt werden. Die Schwenkhülse 5 ist zumindest teilweise in dem Gehäuse 2 angeordnet. Zur drehbaren Lagerung des Betätigungselements 4 ist die Schwenkhülse 5 des Weiteren gegenüber dem Gehäuse 2 verdrehbar. Gemäß dem vorliegenden Ausführungsbeispiel ist die Schwenkhülse 5 drehbar in dem Gehäuse 2 gelagert. Bei einem über das Betätigungselement 4 eingebrachten Drehmoment wird das Betätigungselement 4 gemeinsam mit der Schwenkhülse 5 um eine Hochachse der Kartusche 1 verdreht. Durch diese Verdrehung kann die Temperatur des Mischwassers eingestellt werden.

Zur Begrenzung dieser Verdrehbarkeit der Schwenkhülse 5 umfasst die Kartusche 1 ein Begrenzungselement 6. Bei dem Begrenzungselement 6 handelt es sich gemäß dem vorliegenden Ausführungsbeispiel insbesondere um eine Begrenzungshülse. Das Begrenzungselement 6 ist vorzugsweise in eine kopfseitige Öffnung der Kartusche 1, aus der das Betätigungselement 4 herausragt, eingebracht und/oder mit dem Gehäuse verklippst. Alternativ kann das Begrenzungselement 6 aber auch auf andere Art und Weise lösbar mit dem Gehäuse 2 verbunden sein.

Das Begrenzungselement 6 ist gegenüber dem Gehäuse 2 um dessen Hochachse verdrehbar. Hierfür ist das Begrenzungselement 6 gemäß Figur 2 im Bereich seines Außenumfangs 7 drehbar im und/oder am Gehäuse 2 gelagert. Beim Verdrehen des Betätigungselements 4 wird somit neben der Schwenkhülse 5 auch das Begrenzungselement 6 mitrotiert.

Die Verdrehbarkeit des Begrenzungselements 6 ist jedoch gemäß Figur 1 auf einen ersten Verdrehwinkel α beschränkt. Hierfür weist die Kartusche 1 einen Anschlagsmechanismus 8 auf. Der Anschlagsmechanismus 8 umfasst zumindest einen am Begrenzungselement 6 ausgebildeten ersten Anschlag 9, und einen am Gehäuse 2 ausgebildeten und mit dem ersten Anschlag 9 korrespondierenden zweiten Anschlag 10. Beim Verdrehen des Begrenzungselements 4 um den ersten Verdrehwinkel α schlägt der erste Anschlag 9 zum Begrenzen der Verdrehbarkeit des Begrenzungselements 6 gegen den zweiten Anschlag 10 des Gehäuses 2 an. Gleiches kann in entgegengesetzter Drehrichtung ausgebildet sein.

Um die Verdrehbarkeit der Schwenkhülse 5 und damit auch des Betätigungselements 4 zu erhöhen, ist die Schwenkhülse 5 gemäß Figur 2 zusätzlich gegenüber dem Begrenzungselement 4 um einen zweiten Verdrehwinkel β verdrehbar. Infolgedessen kann die Schwenkhülse 5 gemeinsam mit dem Betätigungselement 4 gegenüber dem Gehäuse 2 um einen im Vergleich zum ersten Verdrehwinkel α größeren Gesamtverdrehwinkel verdreht werden. Dieser Gesamtverdrehwinkel der Schwenkhülse 5 entspricht der Summe des ersten und zweiten Verdrehwinkels α, β.

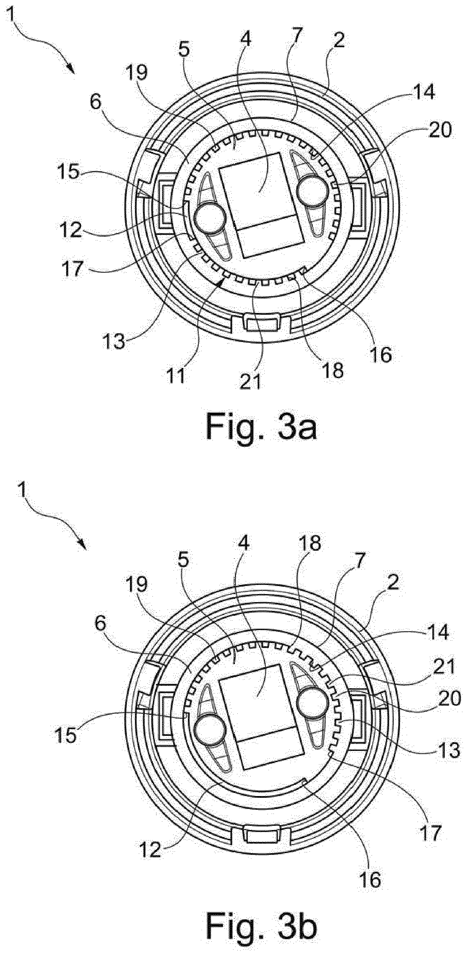

Zur Ausbildung dieser zusätzlichen Relativverdrehbarkeit zwischen Schwenkhülse 5 und Begrenzungselement 6 weist die Kartusche 1 gemäß Figur 2 und 3a einen Begrenzungsmechanismus 11 auf. Dieser Begrenzungsmechanismus 11 bewirkt, dass die Schwenkhülse 5 relativ zum Begrenzungselement 6 um den zusätzlichen zweiten Verdrehwinkel β verdreht werden kann. Vorliegend ist der Begrenzungsmechanismus 12 am Innenumfang 14 des Begrenzungselements 6 angeordnet.

Wie in Figur 2 und 3a ersichtlich ist, umfasst der Begrenzungsmechanismus 11 eine Begrenzungsaussparung 12 und einen Begrenzungsfortsatz 13. Gemäß dem vorliegenden Ausführungsbeispiel ist die Begrenzungsaussparung 12 an der Schwenkhülse 5 und der Begrenzungsfortsatz 13 am Begrenzungselement 6 ausgebildet. In einem vorliegend nicht dargestellten alternativen Ausführungsbeispiel kann deren Anordnung jedoch ebenso invertiert sein, so dass die Begrenzungsaussparung 12 am Begrenzungselement 6 und der Begrenzungsfortsatz 13 an der Schwenkhülse 5 ausgebildet sind.

Wie insbesondere aus Figur 3a hervorgeht, greift der Begrenzungsfortsatz 13 in die Begrenzungsaussparung 12 ein. Die Begrenzungsaussparung 12 und der Begrenzungsfortsatz 13 erstrecken sich jeweils in Umfangsrichtung der Kartusche 1. Hierbei erstreckt sich die Begrenzungsaussparung 12 über ein im Vergleich zum Begrenzungsfortsatz 13 größeres Winkelintervall. Infolgedessen ist der Begrenzungsfortsatz 13 in Umfangsrichtung der Kartusche 1 mit Spiel in der Begrenzungsaussparung 12 aufgenommen. Dieses Spiel bestimmt die Relativverdrehbarkeit zwischen Schwenkhülse 5 und Begrenzungselement 6.

Die Begrenzungsaussparung 12 weist zwei Endanschläge 15, 16 auf. Gemäß Figur 3a stößt der erste Endanschlag 15 bei einer abbildungsgemäßen Verdrehung der Schwenkhülse 5 entgegen dem Uhrzeigersinn gegen den ersten Gegenanschlag 17. Bei einer abbildungsgemäß im Uhrzeigersinn gerichteten Verdrehung der Schwenkhülse 5 stößt der zweite Endanschlag 16 gegen den zweiten Gegenanschlag 18. Über die Endanschläge 15, 16 ist somit der zweite Verdrehwinkel β festgelegt.

Bei in einer ersten Endstellung befindlichen Betätigungselement 4 liegt demnach der erste Endanschlag 15 an dem ersten Gegenanschlag 17 an. Des Weiteren ist der erste und zweite Anschlag 9, 10 des Anschlagsmechanismus 8 gemäß der in Figur 1 dargestellten Lage weitest möglich voneinander beabstandet. Zusätzlich kann zwischen der Schwenkhülse 5 und dem Gehäuse 2 ein in den vorliegenden Figuren nicht einsehbarer Anschlag ausgebildet sein, über den in die eine Drehrichtung die Endlage der Schwenkhülse 5 gegenüber dem Gehäuse 2 festgelegt ist. Zum Verändern der Wassertemperatur wird beim Verdrehen des Betätigungselements 4 in die entgegengerichtete zweite Lage das Betätigungselement 4 gemeinsam mit der Schwenkhülse 5 und dem Begrenzungselement 6 um den ersten Verdrehwinkel α verdreht. Am Ende des maximal zulässigen ersten Verdrehwinkels α stößt das Begrenzungselement 6 mit seinem ersten Anschlag 9 gegen den zweiten Anschlag 10 des Gehäuses 2 (vgl. Figur 1). Das Begrenzungselement 6 kann somit nicht über den ersten Verdrehwinkel α hinausgedreht werden.

Aufgrund des Begrenzungsmechanismus 11 kann jedoch das Betätigungselement 4 gemeinsam mit der Schwenkhülse 5 im Umfang des zweiten Verdrehwinkels β weiter verdreht werden, nämlich soweit bis der zweite Endanschlag 16 gegen den zweiten Gegenanschlag 18 anschlägt. Die maximale Verdrehbarkeit der Schwenkhülse 5 respektive des Betätigungselements 4 ist somit gemäß dem in Figur 3a dargestellten Montagezustand durch die Summe aus erstem und zweiten Verdrehwinkel α, β definiert. Zusätzlich kann zwischen der Schwenkhülse 5 und dem Gehäuse 2 ein in den vorliegenden Figuren nicht einsehbarer weiterer Anschlag ausgebildet sein, über den diese zweite Endlage der Schwenkhülse 5 gegenüber dem Gehäuse 2 festgelegt ist. Die beiden zwischen der Schwenkhülse 5 und dem Gehäuse 2 vorliegend nicht einsehbaren Anschläge begrenzen somit den Gesamtverdrehwinkel α + β. Hierdurch kann in den beiden Endlagen der Schwenkhülse 5 die Anschlagskraft vorzugsweise zumindest teilweise unmittelbar in das Gehäuse 2 abgeleitet werden.

Wenn eine derartige Verdrehwinkelvergrößerung nicht erwünscht ist, kann die vorliegende Kartusche 1 auch derart montiert werden, dass das Betätigungselement 4 gemeinsam mit der Schwenkhülse 5 und dem Begrenzungselement 6 ausschließlich im Umfang des ersten Verdrehwinkels α verdreht werden können. Der zweite Verdrehwinkel β ist somit gesperrt. Figur 3b zeigt diesen alternativen Montagezustand der Kartusche 1. In diesem Fall ist der Gesamtverdrehwinkel in Drehrichtung des Heißwassers eingeschränkt, um die maximal einstellbare Temperatur zu begrenzen.

Zur Arretierung der Schwenkhülse 5 gegenüber dem Begrenzungselement 6 weist die Kartusche 1, wie insbesondere aus Figur 3b hervorgeht, eine Arretieraussparung 19 auf. Gemäß dem vorliegenden Ausführungsbeispiel ist die Arretieraussparung 19 am Außenumfang der Schwenkhülse 5 ausgebildet. Alternativ kann diese aber auch ebenso am Innenumfang 14 des Begrenzungselements 6 ausgebildet sein, insbesondere dann, wenn auch die Begrenzungsaussparung 12 am Innenumfang 14 des Begrenzungselements 6 ausgebildet ist.

Die Arretieraussparung 19 ist in Umfangsrichtung benachbart zur Begrenzungsaussparung 12 angeordnet. Gemäß Figur 3b ist das Begrenzungselement 6 relativ zur Schwenkhülse 5 derart verdreht montiert bzw. eingesetzt, dass der Begrenzungsfortsatz 13 formschlüssig in die Arretieraussparung 19 eingreift. Hierdurch ist das Begrenzungselement 6 mittels Formschluss drehfest mit der Schwenkhülse 5 verbunden.

Um hohe Kräfte aufnehmen zu können, ist die Arretieraussparung 19 und der Begrenzungsfortsatz 13 als Verzahnung ausgebildet. Gemäß dem vorliegenden Ausführungsbeispiel ist die Arretieraussparung 19 als Außenverzahnung 20 und der Begrenzungsfortsatz 13 als Innenverzahnung 21 ausgebildet. An den beiden Umfangsende des als Verzahnung ausgebildeten Begrenzungsfortsatzes 13 sind die Gegenanschläge 17, 18 ausgebildet.

Die Arretieraussparung 19 erstreckt sich gemäß Figur 3a und 3b im Vergleich zum Begrenzungsfortsatz 13 um ein größeres Winkelintervall, so dass die Schwenkhülse 5 relativ zum Begrenzungselement 6 in unterschiedlichen Winkelstellungen eingesetzt und hierdurch arretierbar ist.

Wenn der Begrenzungsfortsatz 13 gemäß dem in Figur 3b dargestellten Montagezustand nicht mehr in die Begrenzungsaussparung 12, sondern in die Arretieraussparung 19 eingreift, kann die Schwenkhülse 5 nicht mehr um den zweiten Verdrehwinkel β verdreht werden, sondern nur noch um den ersten Verdrehwinkel α.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Kartusche
- 2: Gehäuse
- 3: Boden
- 4: Betätigungselement
- 5: Schwenkhülse
- 6: Begrenzungselement
- 7: Außenumfang
- 8: Anschlagsmechanismus
- 9: erster Anschlag
- 10: zweiter Anschlag
- 11: Begrenzungsmechanismus
- 12: Begrenzungsaussparung
- 13: Begrenzungsfortsatz
- 14: Innenumfang
- 15: erster Endanschlag
- 16: zweiter Endanschlag
- 17: erster Gegenanschlag
- 18: zweiter Gegenanschlag
- 19: Arretieraussparung
- 20: Außenverzahnung
- 21: Innenverzahnung

- α: erster Verdrehwinkel
- β: zweiter Verdrehwinkel

## Patentansprüche

1. Kartusche (1) für eine Sanitärarmatur mit
einem Gehäuse (2),
einer Schwenkhülse (5) zum schwenkbaren Aufnehmen eines Betätigungselements (6), die zumindest teilweise in dem Gehäuse (2) angeordnet und gegenüber diesem zum Einstellen der Wassertemperatur verdrehbar ist, und
einem Begrenzungselement (6) zum Begrenzen der Verdrehbarkeit der Schwenkhülse (5), das auf einen ersten Verdrehwinkel (α) begrenzt gemeinsam mit der Schwenkhülse (5) gegenüber dem Gehäuse (2) verdrehbar ist,
**dadurch gekennzeichnet,**
**dass** die Schwenkhülse (5) gegenüber dem Begrenzungselement (6) um einen zweiten Verdrehwinkel (β) verdrehbar ist, so dass die Schwenkhülse (5) gegenüber dem Gehäuse (2) insgesamt über den ersten und zweiten Verdrehwinkel (α, β) verdreht werden kann.

2. Kartusche nach dem vorherigen Anspruch, **dadurch gekennzeichnet, dass** zwischen dem Begrenzungselement (6) und der Schwenkhülse (5) ein Begrenzungsmechanismus (11) ausgebildet ist, der die Verdrehbarkeit der Schwenkhülse (5) gegenüber dem Begrenzungselement (6) auf den zweiten Verdrehwinkel (β) beschränkt.

3. Kartusche nach einem oder mehreren der vorherigen Ansprüche, **dadurch gekennzeichnet, dass** der Begrenzungsmechanismus (11) eine an dem Begrenzungselement (6) oder der Schwenkhülse (5) ausgebildete Begrenzungsaussparung (12) und einen am anderen der beiden Bauteile (5, 6) ausgebildeten und in die Begrenzungsaussparung (12) eingreifenden Begrenzungsfortsatz (13) aufweist.

4. Kartusche nach einem oder mehreren der vorherigen Ansprüche, **dadurch gekennzeichnet, dass** sich die Begrenzungsaussparung (12) und/oder der Begrenzungsfortsatz (13) jeweils über ein Winkelintervall in Umfangsrichtung der Kartusche (1) erstrecken.

5. Kartusche nach einem oder mehreren der vorherigen Ansprüche, **dadurch gekennzeichnet, dass** sich die Begrenzungsaussparung (12) im Vergleich zum Begrenzungsfortsatz (13) über ein größeres Winkelintervall erstreckt, so dass der Begrenzungsfortsatz (13) in Umfangsrichtung der Kartusche (1) mit Spiel in der Begrenzungsaussparung (12) aufgenommen ist.

6. Kartusche nach einem oder mehreren der vorherigen Ansprüche, **dadurch gekennzeichnet, dass** die Begrenzungsaussparung (12) zwei voneinander in Umfangsrichtung der Kartusche (1) beabstandete Endanschläge (15,16) aufweist.

7. Kartusche nach einem oder mehreren der vorherigen Ansprüche, **dadurch gekennzeichnet, dass** das Begrenzungselement (6) oder die Schwenkhülse (5) eine zur Begrenzungsaussparung (12) in Umfangsrichtung der Kartusche (1) benachbarte Arretieraussparung (19) aufweist und/oder
dass der Begrenzungsfortsatz (13) in einem alternativen Montagezustand spielfrei in der Arretieraussparung (19) aufnehmbar ist.

8. Kartusche nach einem oder mehreren der vorherigen Ansprüche, **dadurch gekennzeichnet, dass** das Begrenzungselement (6) in dem alternativen Montagezustand im Vergleich zur Schwenkhülse (5) in zumindest zwei zueinander unterschiedlichen Orientierungen arretierbar ist.

9. Kartusche nach einem oder mehreren der vorherigen Ansprüche, **dadurch gekennzeichnet, dass** der Begrenzungsfortsatz (13) und die Arretieraussparung (19) eine zueinander korrespondierende Form aufweisen, wobei vorzugsweise eines dieser beiden Elemente (13, 19) als Innenverzahnung (21) und das andere als Außenverzahnung (20) ausgebildet ist.

10. Kartusche nach einem oder mehreren der vorherigen Ansprüche, **dadurch gekennzeichnet, dass** zwischen dem Begrenzungselement (6) und dem Gehäuse (2) ein Anschlagsmechanismus (8) ausgebildet ist, der die Verdrehbarkeit des Begrenzungselements (6) gegenüber dem Gehäuse (2) auf den ersten Verdrehwinkel (α) beschränkt.

11. Kartusche nach einem oder mehreren der vorherigen Ansprüche, **dadurch gekennzeichnet, dass** das Begrenzungselement (6) als Begrenzungshülse ausgebildet ist und/oder dass der Anschlagsmechanismus (8) an einem Außenumfang (7) und/oder der Begrenzungsmechanismus (11) an einem Innenumfang (14) des Begrenzungselements (6) ausgebildet sind.
